# EUROPEAN PATENT APPLICATION

(11) **EP 4 592 330 A1**
(43) Date of publication of application: **30.07.2025**
(21) Application number: 24201452.0
(22) Date of filing: 19.09.2024
(51) Int. Cl.: C08G 61/00, C08G 10/00, C08J 5/00, C08L 65/00, C09D 165/00, C25B 1/04, H01M 8/00

(54) **NITROGEN-CONTAINING COMPOUNDS AND PREPARATION METHOD THEREOF, ANIONIC RESIN, AND ANIONIC EXCHANGE MEMBRANE**

(30) Priority: 29.01.2024 CN 202410126784
(71) Applicant: EVE Hydrogen Energy Co., LTD., HuiZhou Guangdong 516000 (CN)
(72) Inventor: YOU, Yingxue, HuiZhou, Guangdong, 516000 (CN); LI, Jiaming, HuiZhou, Guangdong, 516000 (CN); LI, Jian, HuiZhou, Guangdong, 516000 (CN); SU, Xiangdong, HuiZhou, Guangdong, 516000 (CN); WANG, Ying, HuiZhou, Guangdong, 516000 (CN)
(74) Representative: Murgitroyd & Company

(57) **Abstract**

The present disclosure provide a nitrogen-containing compound, which includes a segment I with a formula of 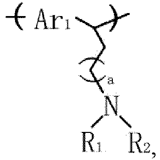 wherein a represents number of methylene groups, a is a positive integer, Ar₁ is an aryl structural unit, and R₁ and R₂ are each independently selected from H, a hydrocarbyl group, or a substituted hydrocarbyl group, or, R₁ and R₂ are connected and form a poly-membered ring together with a N atom to which they are connected.

## Description

### TECHNICAL FIELD

The present disclosure relates to the technical field of batteries, and in particular, to a nitrogen-containing compound and a preparation method thereof, an anionic resin, and an anion exchange membrane.

### BACKGROUND

Anion exchange membranes are widely used in the fields of electrolyzers, fuel cells, carbon dioxide reduction, water softening, desalted water, pure water preparation, hydrometallurgy, separation of rare element, pharmaceutical, sugar industry, amino acid adsorption, and the like. In the field of electrolytic water, anion exchange membranes (AEM) are often used to separate hydrogen between an anode and a cathode and to provide an anion transport channel. Effective active component of the anion exchange membrane is anionic resin, which is generally composed of a polymer backbone and charged ion conductive groups. The polymer backbone and ion conductive groups are connected by long or short side chains. The reported anionic resins with polyphenylene ether, poly (arylene ether), polysulfone, polybenzimidazole, and the like as backbones have the defects of high rigidity and difficult film formation.

### TECHNICAL PROBLEM

The present disclosure aims to solve the technical problem of how to improve the flexibility of an anion exchange membrane so that its tensile strength and elongation at break is improved.

### SUMMARY OF INVENTION

In a first aspect, the present disclosure provides a nitrogen-containing compound. The nitrogen-containing compound includes a segment I with a formula of 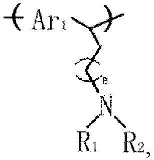 wherein a represents the number of methylene groups, a is a positive integer, Ar₁ is an aryl structural unit, and R₁ and R₂ are each independently selected from H, a hydrocarbyl group or a substituted hydrocarbyl group, or, R₁ and R₂ are connected and form a poly-membered ring together with a N atom to which they are connected.

In a second aspect, the present disclosure provides a method for preparing a nitrogen-containing compound as described above, which includes steps of: S1. preparing monomer raw materials, namely, selecting a corresponding aromatic monomer according to the aryl structural units included in the backbone of the nitrogen-containing compound, using the aromatic monomer as the backbone monomer raw materials, and selecting branched monomer raw materials according to the types of segments included in the nitrogen-containing compound, wherein the branched monomer raw materials include aminoacetal monomers with a general formula of 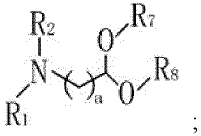 S2. adding the monomer raw materials into an alkyl organic solvent, and fully mixing to obtain a reaction base liquid; S3. adding an organic acid catalyst into the reaction base liquid, so that the aromatic monomer and nitrogen-containing aminoacetal monomers in the reaction base liquid polymerize under the action of the organic acid catalyst; S4. treating product of the polymerization reaction with pure water or an alkaline solution to remove residual organic acid catalyst, washing and drying to obtain a nitrogen-containing compound.

In a third aspect, the present disclosure provides an anionic resin including a segment V with a formula of 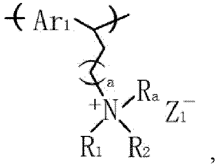 wherein a represents the number of methylene groups, and a is a positive integer; Ar₁ is an aryl structural unit; R₁ and R₂ are each independently selected from H, a hydrocarbyl group or a substituted hydrocarbyl group, or, R₁ and R₂ are connected and form a poly-membered ring together with a N atom to which they are connected; Rₐ is selected from one of an aromatic group, a chain alkyl group containing 1 to 10 carbon atoms, and a cycloalkyl group containing 1 to 10 carbon atoms; and Z₁⁻represents an anion.

In a fourth aspect, the present disclosure provides a method for preparing an anionic resin by subjecting a nitrogen-containing compound as described above and a quaternizing agent to quaterisation reaction. The quaternizing agent includes at least one of iodomethane, iodoethane, iodopropane, iodobutane, iodopentane, iodohexane, bromoethane, bromopropane, bromobutane, bromopentane, bromohexane, bromocyclohexane, bromocyclopentane, methyl methanesulfonate, ethyl methanesulfonate, propyl methanesulfonate, butyl methanesulfonate, propyl ethanesulfonate, ethyl ethanesulfonate, but-3-yn-1-yl methanesulfonate, diallyl sulfonate, methyl benzenesulfonate, methyl p-toluenesulfonate, methyl nitrobenzenesulfonate, methyl trifluoromethanesulfonate, ethyl trifluoromethanesulfonate, ethyl toluenesulfonate, toluene-4-sulfonic acid cyclobutyl ester, butyl toluenesulfonate, neopentyl benzenesulfonate, tetrahydro-2H-pyran-4-yl methanesulfonate, or cyclohexyl p-toluenesulfonate.

In a fifth aspect, the present disclosure provides an anion exchange membrane including an anionic resin as described above.

By constructing macromolecules of nitrogen-containing compounds by using the structural units of general formula I, the flexibility of anion exchange membranes prepared by using nitrogen-containing compounds is improved, and the tensile strength and elongation at break is improved.

The anion protective film according to the present disclosure has excellent flexibility, and it is applied to an electrolyzer to optimize the interface contact between electrodes.

### EMBODIMENTS OF INVENTION

In some embodiments, in segment I, Ar₁ includes at least one of the following structural units:

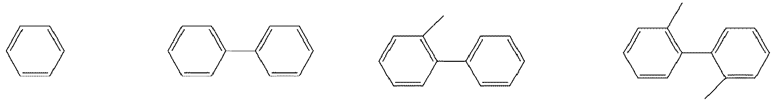

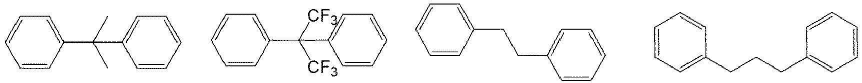

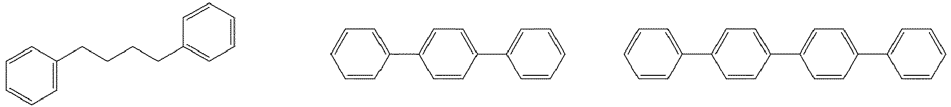

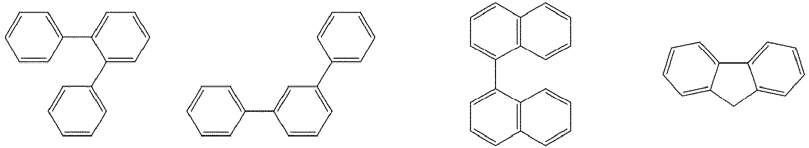

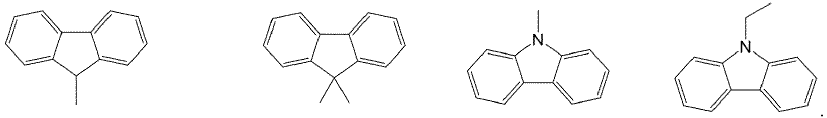

In some embodiments, in segment I, Ar₁ includes 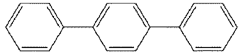 and/or

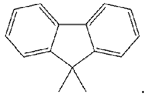

In some embodiments, in segment I, R₁ and R₂ are each independently selected from H, methyl, a chain alkyl group containing 2 to 7 carbon atoms, a cycloalkyl group containing 3 to 10 carbon atoms, an aryl group or a substituted aryl group; or R₁ and R₂ are connected and form a poly-membered ring together with a N atom to which they are connected. The poly-membered ring is a five-membered ring, a six-membered ring or a seven-membered ring.

In some embodiments, in the segment I, R₁ and R₂ are independently selected from methyl or a chain alkyl group containing 2 to 7 carbon atoms.

In some embodiments, segment I has a formula of

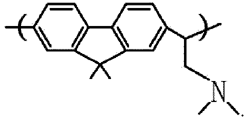

In some embodiments, in the segment I, R₁ and R₂ are connected and form a six membered ring together with a N atom to which they are connected.

In some embodiments, the six-membered ring is a piperidine ring or a piperazine ring.

In some embodiments, segment I has a formula of

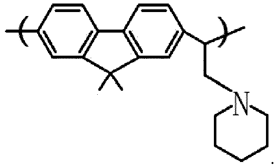

In some embodiments, the nitrogen-containing compound further includes at least one of segment II, segment III and segment IV Segment II has a formula of 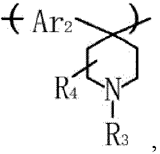 wherein Ar₂ is an aryl structural unit. Segment III has a formula of 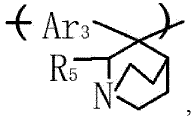 wherein Ar₃ is an aryl structural unit. Segment IV has a formula of 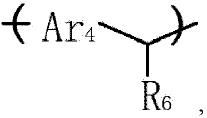 wherein Ar₄ is an aryl structural unit.

In some embodiments, Ar₂, Ar₃, and Ar₄ each independently includes at least one of the following structural units:

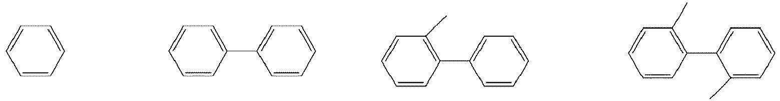

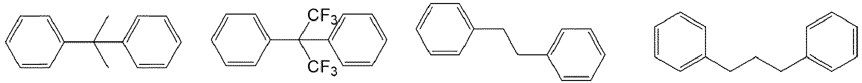

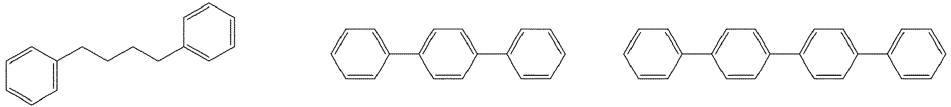

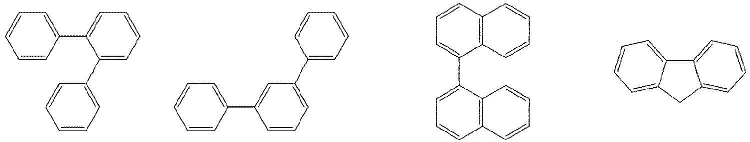

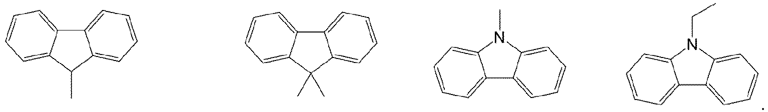

In some embodiments, R₃, R₄, R₅, and R₆ are each independently selected from H, a hydrocarbyl group, or a substituted hydrocarbyl group.

In some embodiments, the nitrogen-containing compound includes a general structure as follows: 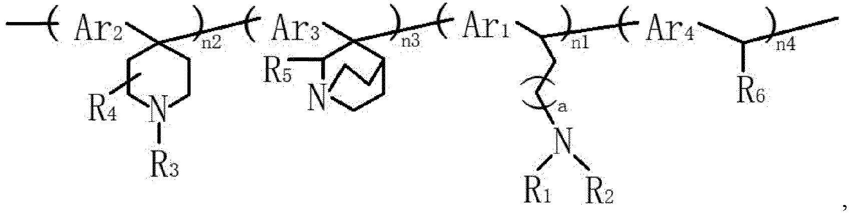 wherein n1 represents the degree of polymerization of segment I; n2 represents the degree of polymerization of segment II, and n2 is a non-negative integer; n3 represents the degree of polymerization of segment III, n3 is a non-negative integer, and Ar₃ is an aryl structural unit; and n4 represents the degree of polymerization of segment IV, and n4 is a non-negative integer.

In some embodiments, n1, n2, n3, and n4 are each independently selected from integers between 10 and 1000000. n1 is 10, 500, 2000, 10000, 500000, 1000000, or the like, but it is not limited to the listed values, and other unlisted values within the numerical range are also applicable. n2 is 10, 500, 2000, 10000, 500000, 1000000, or the like, but it is not limited to the listed values, and other unlisted values within the numerical range are also applicable. n3 is 10, 500, 2000, 10000, 500000, 1000000, or the like, but it is not limited to the listed values, and other unlisted values within the numerical range are also applicable. n4 is 10, 500, 2000, 10000, 500000, 1000000, or the like, but it is not limited to the listed values, and other unlisted values within the numerical range are also applicable.

In some embodiments, n1, n2, n3, and n4 are each independently selected from integers between 50 and 300. n1 is 50, 100, 150, 300, or the like, but it is not limited to the listed values, and other unlisted values within the numerical range are also applicable. n2 is 50, 100, 150, 300, or the like, but it is not limited to the listed values, and other unlisted values within the numerical range are also applicable. n3 is 50, 100, 150, 300, or the like, but it is not limited to the listed values, and other unlisted values within the numerical range are also applicable. n4 is 50, 100, 150, 300, or the like, but it is not limited to the listed values, and other unlisted values within the numerical range are also applicable.

In some embodiments, the aminoacetal monomer includes at least one of the following monomers:

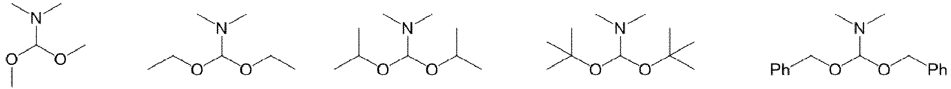

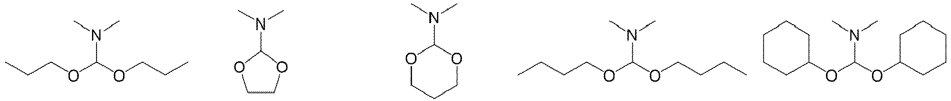

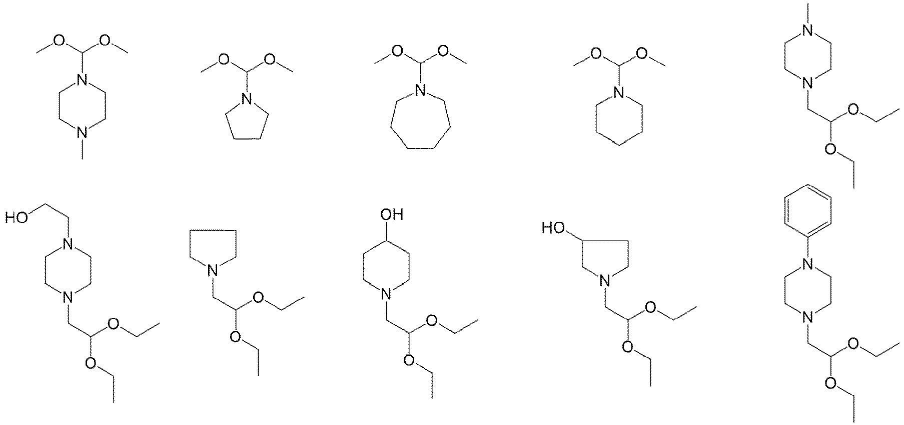

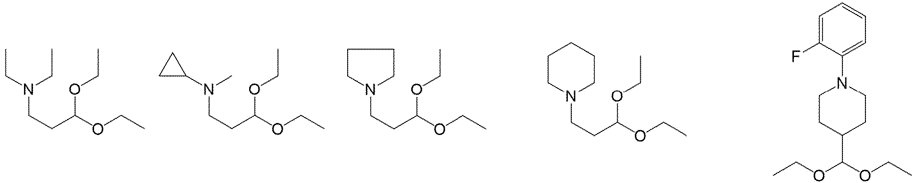

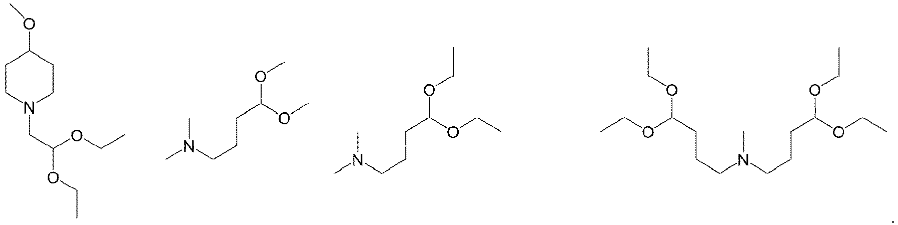

In some embodiments, the branched monomer raw material further includes a piperidone monomer with a general formula of

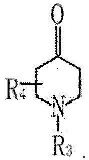

In some embodiments, the piperidone monomer includes at least one of the following monomers:

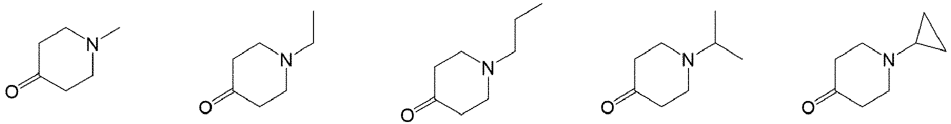

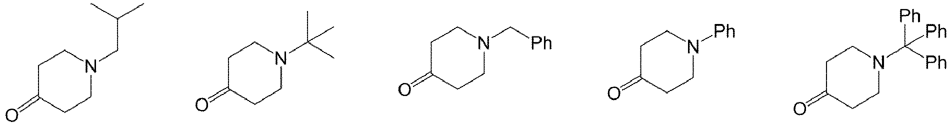

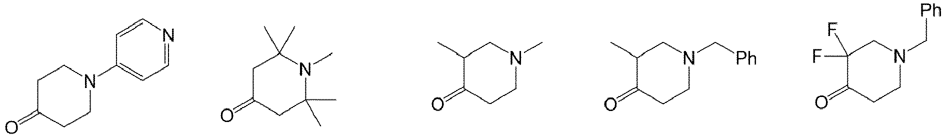

In some embodiments, the branched monomer raw material further includes a quinuclidone monomer with a general formula of

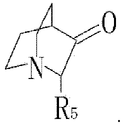

In some embodiments, the quinuclidone monomer includes at least one of the following monomers:

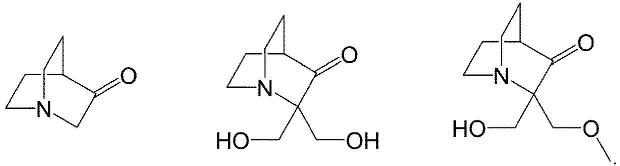

In some embodiments, the branched monomer raw materials further include an acetal monomer with a general formula of

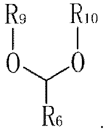

In some embodiments, the acetal monomer includes at least one of the following monomers:

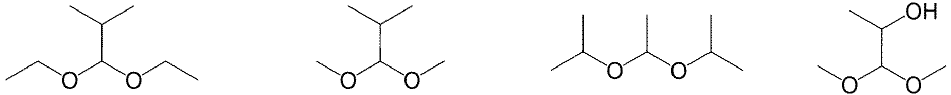

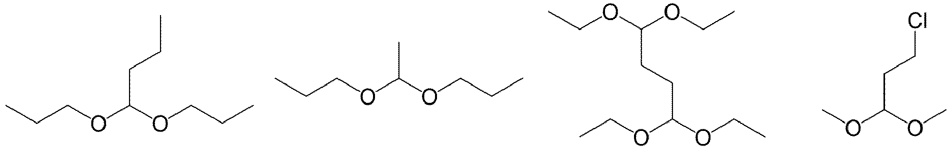

In some embodiments, the organic acid catalyst includes at least one of methanesulfonic acid, pentafluoropropionic acid, trifluoroacetic acid, trifluoromethanesulfonic acid, and heptafluorobutyric acid.

In some embodiments, S3 includes specific steps as follows: firstly reducing the temperature of the reaction base liquid to a temperature of 0°C to 3°C, adding an organic acid catalyst thereto, and then raising the temperature of the reaction base liquid to a temperature of 5°C to 24°C to carry out a polymerization reaction for 2 hours to 24 hours. In S3, before adding the organic acid catalyst, the temperature of the reaction base liquid is controlled at a temperature of 0°C, 1°C, 2°C, 2.5°C, 3°C, and the like, but it is not limited to the listed values, and other unlisted values within the numerical range are also applicable. After adding the organic acid catalyst, the temperature of the reaction base liquid is raised by 5°C, 10°C, 15°C, 20°C, or 24°C, but it is not limited to the listed values, and other unlisted values within the numerical range are also applicable. The reaction time is 2 hours, 5 hours, 10 hours, 16 hours, 24 hours, and other unlisted values within the applicable value range of the reaction time are also applicable.

In some embodiments, the alkyl organic solvent includes at least one of dichloromethane, trichloromethane, chloroform, and tetrahydrofuran.

In some embodiments, in S4, the alkaline solution contains at least one of sodium hydroxide, sodium bicarbonate, potassium bicarbonate, potassium carbonate, sodium carbonate, and potassium hydroxide.

In some embodiments, in the segment V, Ar₁ includes at least one of the following structural units:

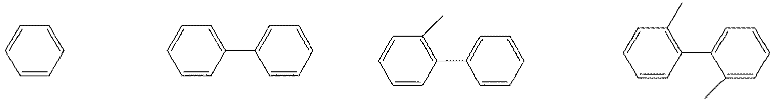

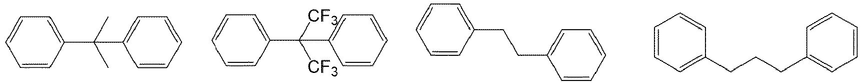

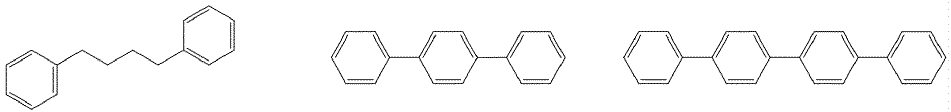

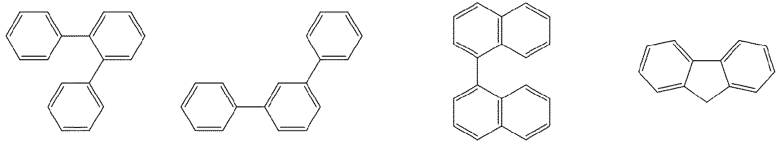

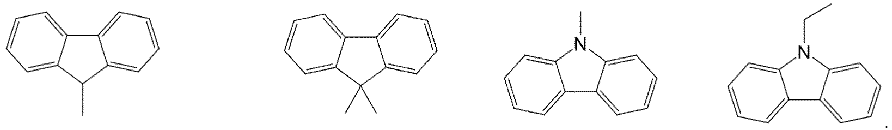

In some embodiments, the anionic resin further includes at least one of segment VI, segment VII, and segment IV Segment IV has a formula of 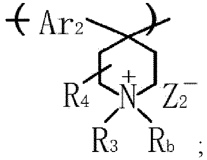 wherein Ar₂ is an aryl structural unit, Z₂⁻ represents an anion, and R_{b} is selected from one of an aromatic group, a chain alkyl group containing 1 to 10 carbon atoms, and a cycloalkyl group containing 3 to 10 carbon atoms. Segment VII has a formula of 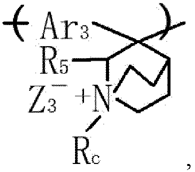 wherein Ar₃ is an aryl structural unit, Z₃⁻ represents an anion, and R_{c} is selected from one of an aromatic group, a chain alkyl group containing 1 to 10 carbon atoms, and a cycloalkyl group containing 3 to 10 carbon atoms. Segment IV has a formula of 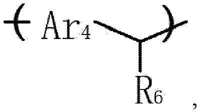 wherein Ar₄ is an aryl structure unit.

In some embodiments, the anionic resin includes a general structure as follows: 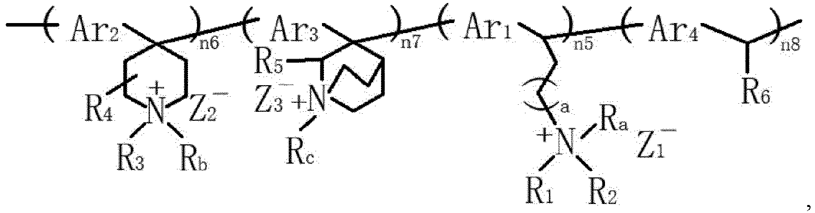 wherein n5 represents the degree of polymerization of segment V, and n5 is a positive integer; n6 represents the degree of polymerization of segment VI, and n6 is a non-negative integer; n7 represents the degree of polymerization of segment VII, and n7 is a non-negative integer; and n8 represents the degree of polymerization of segment IV, and n8 is a non-negative integer.

In some embodiments, n5, n6, n7, n8 are each independently selected from integers between 10 and 1000000. n5 is 10, 500, 2000, 10000, 500000, 1000000, or the like, but it is not limited to the listed values, and other unlisted values within the numerical range are also applicable. n6 is 10, 500, 2000, 10000, 500000, 1000000, or the like, but it is not limited to the listed values, and other unlisted values within the numerical range are also applicable. n7 is 10, 500, 2000, 10000, 500000, 1000000, or the like, but it is not limited to the listed values, and other unlisted values within the numerical range are also applicable. n8 is 10, 500, 2000, 10000, 500000, 1000000, or the like, but it is not limited to the listed values, and other unlisted values within the numerical range are also applicable.

In some embodiments, n5, n6, n7, n8 are each independently selected from integers between 50 and 300. n5 is 50, 100, 150, 300, or the like, but it is not limited to the listed values, and other unlisted values within the numerical range are also applicable. n6 is 50, 100, 150, 300, or the like, but it is not limited to the listed values, and other unlisted values within the numerical range are also applicable. n7 is 50, 100, 150, 300, or the like, but it is not limited to the listed values, and other unlisted values within the numerical range are also applicable. n8 is 50, 100, 150, 300, or the like, but it is not limited to the listed values, and other unlisted values within the numerical range are also applicable.

### Example 1

In this example, a nitrogen-containing compound composed of segment I 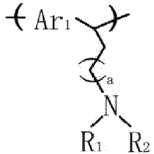 is prepared.

### (1) Preparation of nitrogen-containing compound A1:

S1. taking 0.15 mol of 9,9-dimethylfluorene and 0.18 mol of dimethylaminoacetaldehyde diethyl acetal respectively;

S2. adding the raw materials taken in S1 to 50 mL of dichloromethane, fully mixing and dispersing to obtain a reaction base liquid;

S3. adding 120 mL of trifluoromethanesulfonic acid dropwise to the reaction base liquid at a temperature of 0°C, after the addition is completed, raising the temperature of the reaction system to 8°C, and subjecting the above-mentioned raw materials to hydrocarbon alkylation reaction at this temperature for 3 hours;

S4. after the reaction of S3 is completed, treating the product with pure water, filtering, pulverizing the resulting solid, followed by washing with pure water, and drying successively to obtain the final product, i.e., nitrogen-containing compound A1.

The nitrogen-containing compound A1 thus obtained has a formula of

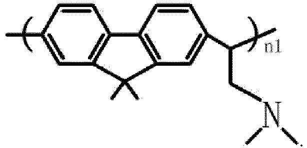

### (2) Preparation of nitrogen-containing compound A2:

S1. taking 0.15 mol of 9,9-dimethylfluorene and 0.18 mol of 1-(2,2-diethoxyethyl) piperidine;

S2. adding the raw materials taken in S1 to 50 mL of dichloromethane, fully mixing and dispersing to obtain a reaction base liquid;

S3. adding 100 mL of trifluoromethanesulfonic acid dropwise to the reaction base liquid at a temperature of -3°C, after the addition is completed, raising the temperature of the reaction system to 5°C, and subjecting the above-mentioned raw materials to hydrocarbon alkylation reaction at this temperature for 6 hours;

S4. after the reaction of S3 is completed, treating the product with pure water, filtering, pulverizing the resulting solid, followed by washing with pure water, and drying successively to obtain the final product, i.e., nitrogen-containing compound A2.

The nitrogen-containing compound A2 thus obtained has a formula of

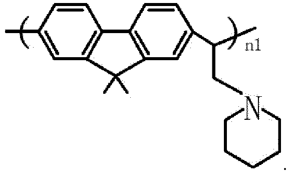

### (3) Preparation of nitrogen-containing compound A3:

S1. taking 0.15 mol of m-terphenyl and 0.18 mol of dimethylaminoacetaldehyde diethyl acetal respectively;

S2. adding the raw materials taken in S1 to 50 mL of dichloromethane, fully mixing and dispersing to obtain a reaction base liquid;

S3. adding 60 mL of trifluoromethanesulfonic acid dropwise to the reaction base liquid at a temperature of 3°C, after the addition is completed, raising the temperature of the reaction system to 13°C, and subjecting the above-mentioned raw materials to hydrocarbon alkylation reaction at this temperature for 3 hours;

S4. after the reaction of S3 is completed, treating the product with pure water, filtering, pulverizing the resulting solid, followed by washing with pure water, and drying successively to obtain the final product, i.e., nitrogen-containing compound A3.

The nitrogen-containing compound A3 thus obtained has a formula of

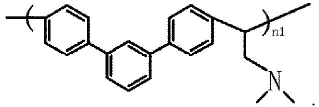

### (4) Preparation of nitrogen-containing compound A4:

S1. taking 0.15 mol of m-terphenyl, 0.18 mol of dimethylaminoacetaldehyde diethyl acetal, and 0.05 moL of 1-(dimethoxymethyl)piperidine respectively;

S2. adding the raw materials taken in S1 to 45 mL of dichloromethane, fully mixing and dispersing to obtain a reaction base liquid;

S3. adding 120 mL of trifluoromethanesulfonic acid dropwise to the reaction base liquid at a temperature of 0°C, after the addition is completed, raising the temperature of the reaction system to 13°C, and subjecting the above-mentioned raw materials to hydrocarbon alkylation reaction at this temperature for 6 hours;

S4. after the reaction of S3 is completed, treating the product with pure water, filtering, pulverizing the resulting solid, followed by washing with pure water, and drying successively to obtain the final product, i.e., nitrogen-containing compound A4.

The nitrogen-containing compound A4 thus obtained has a formula of:

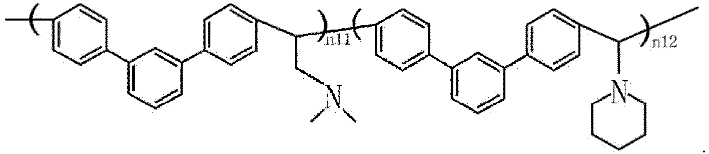

### Example 2

In this example, a nitrogen-containing compound composed of segment I 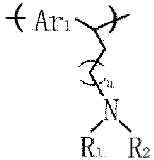 and segment II 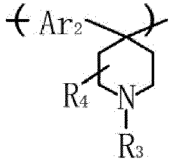 is prepared.

### Preparation of nitrogen-containing compound B:

S1. taking 0.15 mol of p-terphenyl, 0.14 mol of N-methyl-4-piperidone, and 0.04 mol of dimethylaminoacetaldehyde diethyl acetal respectively;

S2. adding the raw materials taken in S1 to 50 mL of dichloromethane, fully mixing and dispersing to obtain a reaction base liquid;

S3. adding 120 mL of trifluoromethanesulfonic acid dropwise to the reaction base liquid at a temperature of 0°C, after the addition is completed, raising the temperature of the reaction system to 13°C, and subjecting the above-mentioned raw materials to hydrocarbon alkylation reaction at this temperature for 10 hours;

S4. after the reaction of S3 is completed, treating the product with pure water, filtering, pulverizing the resulting solid, followed by washing with pure water, and drying successively to obtain the final product, i.e., nitrogen-containing compound B.

The nitrogen-containing compound B thus obtained has a formula of

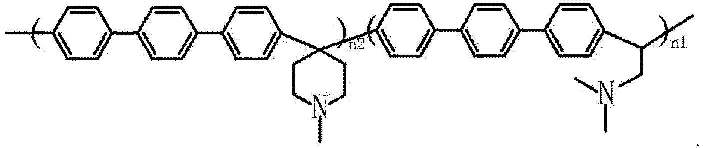

### Example 3

In this example, a nitrogen-containing compound composed of segment I 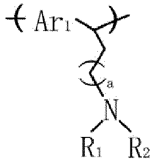 and segment III 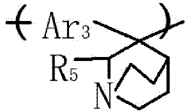 is prepared.

### Preparation of nitrogen-containing compound C:

S1. taking 0.15 mol of p-terphenyl, 0.12 mol of 3-quinuclidinone hydrochloride, and 0.06 mol of 1-(dimethoxymethyl) piperidine respectively;

S2. adding the raw materials taken in S1 to 50 mL of dichloromethane, fully mixing and dispersing to obtain a reaction base liquid;

S3. adding 120 mL of trifluoromethanesulfonic acid dropwise to the reaction base liquid at a temperature of 3°C, after the addition is completed, raising the temperature of the reaction system to 13°C, and subjecting the above-mentioned raw materials to hydrocarbon alkylation reaction at this temperature for 18 hours;

S4. after the reaction of S3 is completed, treating the product with pure water, filtering, pulverizing the resulting solid, followed by washing with pure water, and drying successively to obtain the final product, i.e., nitrogen-containing compound C.

The nitrogen-containing compound C thus obtained has a formula of:

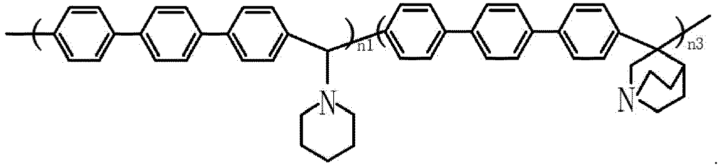

### Example 4

In this example, a nitrogen-containing compound composed of segment I 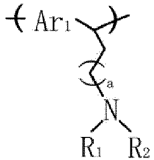 and segment IV 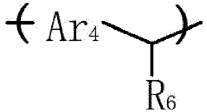 is prepared.

### Preparation of nitrogen-containing compound D:

S1. taking 0.15 mol of p-terphenyl, 0.12 mol of 1-(dimethoxymethyl) piperidine, and 0.06 mol of isobutyraldehyde diethyl acetal respectively;

S2. adding the raw materials taken in S1 to 50 mL of dichloromethane, fully mixing and dispersing to obtain a reaction base liquid;

S3. adding 120 mL of trifluoromethanesulfonic acid dropwise to the reaction base liquid at a temperature of 3°C, after the addition is completed, raising the temperature of the reaction system to 8°C, and subjecting the above-mentioned raw materials to hydrocarbon alkylation reaction at this temperature for 12 hours;

S4. after the reaction of S3 is completed, treating the product with pure water, filtering, pulverizing the resulting solid, followed by washing with pure water, and drying successively to obtain the final product, i.e., nitrogen-containing compound D.

The nitrogen-containing compound D thus obtained has a formula of:

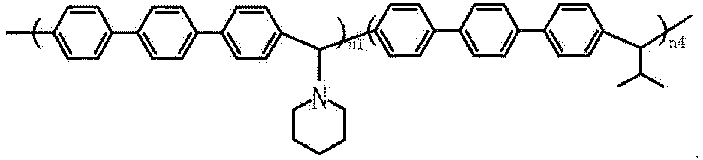

### Example 5

In this example, a nitrogen-containing compound composed of segment I 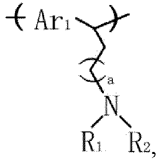 segment II 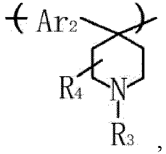 segment III 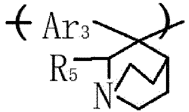 and segment IV 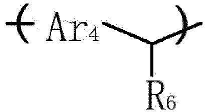 is prepared.

### Preparation of nitrogen-containing compound E:

S1. taking 0.15 mol of p-terphenyl, 0.08 mol of N-methyl-4-piperidone, 0.06 mol of 3-quinuclidinone hydrochloride, 0.02 mol of dimethylaminoacetaldehyde diethyl acetal and 0.02 mol of isobutyraldehyde diethyl acetal respectively;

S2. adding the raw materials taken in S1 to 70 mL of dichloromethane, fully mixing and dispersing to obtain a reaction base liquid;

S3. adding 135 mL of trifluoromethanesulfonic acid dropwise to the reaction base liquid at a temperature of 3°C, after the addition is completed, raising the temperature of the reaction system to 24°C, and subjecting the above-mentioned raw materials to hydrocarbon alkylation reaction at this temperature for 20 hours;

S4. after the reaction of S3 is completed, treating the product with pure water, filtering, pulverizing the resulting solid, followed by washing with pure water, and drying successively to obtain the final product, i.e., nitrogen-containing compound E.

The nitrogen-containing compound E thus obtained has a formula of:

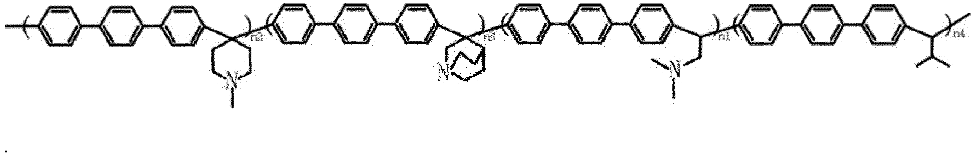

### Comparative Example 1

In this comparative example, a nitrogen-containing compound composed of segment II 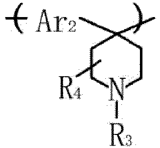 is prepared.

### Preparation of nitrogen-containing compound F:

S1. taking 0.15 mol of p-terphenyl monomer and 0.18 mol of 3-quinuclidone hydrochloride respectively;

S2. adding the raw materials taken in S1 to 50 mL of dichloromethane, fully mixing and dispersing to obtain a reaction base liquid;

S3. adding 120 mL of trifluoromethanesulfonic acid dropwise to the reaction base liquid at a temperature of 0°C, after the addition is completed, raising the temperature of the reaction system to 24°C, and subjecting the above-mentioned raw materials to hydrocarbon alkylation reaction at this temperature for 36 hours;

S4. after the reaction of S3 is completed, treating the product with pure water, filtering, pulverizing the resulting solid, followed by washing with pure water, and drying successively to obtain the final product, i.e., nitrogen-containing compound F.

The nitrogen-containing compound F thus obtained has a formula of

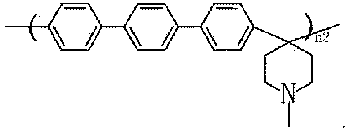

### Comparative Example 2

In this comparative example, a nitrogen-containing compound composed of segment III 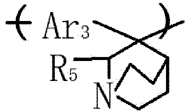 is prepared.

### Preparation of nitrogen-containing compound G:

S1. taking 0.15 mol of p-terphenyl monomer and 0.18 mol of N-methyl-4-piperidone respectively;

S2. adding the raw materials taken in S1 to 50 mL of dichloromethane, fully mixing and dispersing to obtain a reaction base liquid;

S3. adding 90 mL of trifluoromethanesulfonic acid dropwise to the reaction base liquid at a temperature of 0°C, after the addition is completed, raising the temperature of the reaction system to 13°C, and subjecting the above-mentioned raw materials to hydrocarbon alkylation reaction at this temperature for 6 hours;

S4. after the reaction of S3 is completed, treating the product with pure water, filtering, pulverizing the resulting solid, followed by washing with pure water, and drying successively to obtain the final product, i.e., nitrogen-containing compound G.

The nitrogen-containing compound G thus obtained has a formula of

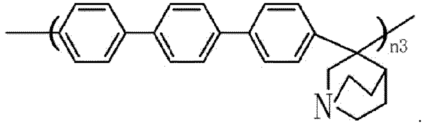

### Example 6

In this example, the nitrogen-containing compound A1, the nitrogen-containing compound A2, the nitrogen-containing compound A3, the nitrogen-containing compound A4, the nitrogen-containing compound B, the nitrogen-containing compound C, the nitrogen-containing compound D, and the nitrogen-containing compound E obtained in the above examples, and the nitrogen-containing compound F and the nitrogen-containing compound G obtained in the above comparative examples are used as raw materials, and iodomethane is used as a quaternizing agent for preparing anion resin in the chloride form through quaterisation reaction and ion exchange.

### Preparation of anion resin in the chloride form:

Step 1: dissolving a nitrogen-containing compound and iodomethane in dimethyl sulfoxide to obtain a reaction solution, and subjecting the nitrogen-containing compound and iodomethane in the reaction solution to a quaterisation reaction at a temperature of 50°C to 100°C for 3 hours to 36 hours. After the reaction is completed, a product solution containing an iodonium anionic resin is obtained.

Step 2: adding a precipitating agent (in this example, deionized water is used as the precipitating agent) to the product solution obtained in step 1 to fully precipitate the precipitate, filtering to collect the the precipitate, then subjecting the precipitate to ion-exchang by using KOH and NaCl aqueous solution, washing, and drying to obtain a solid, which is anion resin in the chloride form obtained by the quaterisation reaction.

According to the different nitrogen-containing compound raw materials, the conditions of quaterisation reaction are optimized with the highest conversion rate as the optimization standard. The optimized reaction conditions are shown in Table 1.

**Table 1: reaction conditions for the quaterisation reaction in example 6**

| Nitrogen-containing compound raw material | Nitrogen-containing multicomponent copolymer: iodomethane (feeding molar ratio) | Quaterisation reaction temperature | Quaterisation reaction time |
|---|---|---|---|
| Nitrogen-containing compound A1 | 1:1.5 | 80 °C | 8 h |
| Nitrogen-containing compound A2 | 1:1.5 | 80 °C | 16 h |
| Nitrogen-containing compound A3 | 1:2 | 80 °C | 10 h |
| Nitrogen-containing compound A4 | 1:1.5 | 80 °C | 12 h |
| Nitrogen-containing compound B | 1:1.5 | 80 °C | 12 h |
| Nitrogen-containing compound C | 1:2 | 80 °C | 24 h |
| Nitrogen-containing compound D | 1:2 | 80 °C | 10 h |
| Nitrogen-containing compound E | 1:2.5 | 80 °C | 36 h |
| Nitrogen-containing compound F | 1:1.5 | 70 °C | 6 h |
| Nitrogen-containing compound G | 1:1.5 | 70 °C | 14 h |

### Example 7

In this example, the nitrogen-containing compound A1, the nitrogen-containing compound A2, the nitrogen-containing compound A3, the nitrogen-containing compound A4, the nitrogen-containing compound B, the nitrogen-containing compound C, the nitrogen-containing compound D, the nitrogen-containing compound E, the nitrogen-containing compound F and the nitrogen-containing compound G obtained in the above comparative examples are used as raw materials, and a sulfonate-based compound is used as a quaternizing agent for preparing sulfonate-based anion resin through quaterisation reaction.

### Preparation of sulfonate-based anion resin:

Step 1: dissolving a nitrogen-containing compound and a sulfonate-based compound in dimethyl sulfoxide to obtain a reaction solution, and subjecting the nitrogen-containing compound and the sulfonate-based compound in the reaction solution to a quaterisation reaction at a temperature of 70°C to 120°C for 3 hours to 72 hours. After the reaction is completed, a product solution containing a sulfonate-based anion resin is obtained.

Step 2: adding a precipitating agent (in this example, deionized water is used as the precipitating agent) to the product solution obtained in step 1 to fully precipitate the precipitate, filtering to collect the the precipitate, then washing and drying to obtain a solid, which is the sulfonate-based anion resin obtained by the quaterisation reaction.

According to the different nitrogen-containing compound raw materials, the species of quaternizing agents and reaction conditions of the quaterisation reaction are optimized with the highest conversion rate as the optimization standard. The optimized reaction conditions are shown in Table 2.

**Table 2: reaction conditions for the quaterisation reaction in example 7**

| Nitrogen-containing compound raw material | Quaternizing agent-sulfonate-based compound | Nitrogen-containing multicomponent copolymer: sulfonate-based compound (feeding molar ratio) | Quaterisation reaction temperature | Quaterisation reaction time |
|---|---|---|---|---|
| Nitrogen-containing compound A1 | Methyl p-toluene sulfonate | 1:2 | 80 °C | 18 h |
| Nitrogen-containing compound A2 | Methyl p-nitrobenzene sulfonate | 1:2.5 | 110 °C | 24 h |
| Nitrogen-containing compound A3 | Methyl p-toluene sulfonate | 1:1.5 | 80 °C | 12 h |
| Nitrogen-containing compound A4 | Methyl p-nitrobenzene sulfonate | 1:2 | 100 °C | 8 h |
| Nitrogen-containing compound B | Methyl p-toluene sulfonate | 1:1.5 | 100 °C | 16 h |
| Nitrogen-containing compound C | Methyl p-nitrobenzene sulfonate | 1:2.5 | 110 °C | 24 h |
| Nitrogen-containing compound D | Methyl p-nitrobenzene sulfonate | 1:2.5 | 110 °C | 24 h |
| Nitrogen-containing compound E | Methyl p-nitrobenzene sulfonate | 1:2.5 | 120 °C | 36 h |
| Nitrogen-containing compound F | Methyl p-toluene sulfonate | 1:1.5 | 80 °C | 12 h |
| Nitrogen-containing compound G | Methyl p-toluene sulfonate | 1:1.5 | 100 °C | 12 h |

### Test Example 1

### 1. Test object

An anion exchange membrane is further prepared by using the anionic resins prepared in example 6 and example 7 is used as the test object.

### 2. Test items

### (1) Mechanical property test

A pure tensile force is applied to the test object to break it according to GB T 20042.3.
a. Tensile strength: the ratio of the maximum load that the test object bears when it breaks under the action of pure tensile force to the width of the stretched membrane is recorded, which is divided into transverse tensile strength and longitudinal tensile strength to evaluate the mechanical strength of the membrane.
b. Elongation at break: the ratio of the distance between two points when the test object breaks under the maximum load before breaking to the original length is recorded, which represents the maximum deformation that an alkaline membrane bears before it is stretched to break, and is used to indicate the flexibility of the membrane.

### 3. Test results

The test results in this test example are shown in table 3 and table 4. Among the test objects, the nitrogen-containing compound A1, the nitrogen-containing compound A2, the nitrogen-containing compound A3, and the nitrogen-containing compound A4 prepared in example 1 are all composed of the structural units conforming to segment I with a formula of 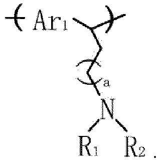 Similarly, the molecular structure of nitrogen-containing compound D prepared in example 4 also includes the structural units conforming to the formula of segment I. While the nitrogen-containing compound F and nitrogen-containing compound G prepared in Comparative Example 1 and Comparative Example 2 are respectively composed of structural units conforming to segment II with a formula of 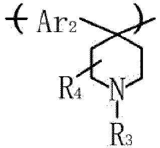 and segment III with a formula of 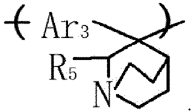 It can be clearly seen from the test results in this test example that, in the case that the species of anions contained in the anion resins are the same, the anion exchange membranes prepared by using the nitrogen-containing compound A1, the nitrogen-containing compound A2, the nitrogen-containing compound A3, the nitrogen-containing compound A4 and the nitrogen-containing compound D, respectively have a higher tensile strength and higher elongation at break compared with the anionic exchange film prepared by using the nitrogen-containing compound F and the nitrogen-containing compound G, respectively.

The nitrogen-containing compound B prepared in example 2 is similar to the nitrogen-containing compound F. The molecular structure of the nitrogen-containing compound B further includes structural units conforming to the formula of segment II. However, the nitrogen-containing compound B differs from the nitrogen-containing compound F in that the nitrogen-containing compound B further includes the structural units conforming to the formula of segment I. Based on this difference, in the case that the species of anions contained in the anion resins are the same, the anion exchange membrane prepared by using the nitrogen-containing compound B have higher tensile strength and higher elongation at break compared with the anionic exchange membrane prepared by using the nitrogen-containing compound F.

The nitrogen-containing compound C prepared in example 3 is similar to the nitrogen-containing compound G. The molecular structure of the nitrogen-containing compound B further includes structural units conforming to the formula of segment III. However, the nitrogen-containing compound C differs from the nitrogen-containing compound G in that the nitrogen-containing compound C further includes the structural units conforming to the formula of segment I. Based on this difference, in the case that the species of anions contained in the anion resins are the same, the anion exchange membrane prepared by using the nitrogen-containing compound G have higher tensile strength and higher elongation at break compared with the anionic exchange membrane prepared by using the nitrogen-containing compound C.

The molecular structure of the nitrogen-containing compound E prepared in example 5 includes structural units conforming to the formula of segment II and structural units conforming to the formula of segment III. Meanwhile, the molecular structure of the nitrogen-containing compound E further includes structural units conforming to the formula of segment I. It can be seen from the test results in this test example that the anion exchange membrane prepared by using the nitrogen-containing compound E have higher tensile strength and higher elongation at break compared with the nitrogen-containing compound F whose molecular structure includes structural units conforming to the formula of segment II and the nitrogen-containing compound G whose molecular structure includes t structural unit conforming to the formula of segment III, respectively.

Based on the test results in this test example, it can be shown that by using the structural units conforming to the formula of segment I to participate in the construction of the macromolecules of nitrogen-containing compounds, the flexibility of the anion exchange membranes prepared by using the nitrogen-containing compounds is improved, and the tensile strength and the elongation at break of the anion exchange membranes is improved. By applying the anion exchange membranes to the electrolyzer, the interface contact between the electrodes is optimized.

**Table 3: mechanical properties test of test objects using the anion resin in the chloride form provided in example 6**

| Group | Tensile strength (MPa) | Elongation at break (%) |
|---|---|---|
| Nitrogen-containing compound A1 | 48 | 23 |
| Nitrogen-containing compound A2 | 45 | 26 |
| Nitrogen-containing compound A3 | 49 | 21 |
| Nitrogen-containing compound A4 | 44 | 19 |
| Nitrogen-containing compound B | 43 | 24 |
| Nitrogen-containing compound C | 46 | 20 |
| Nitrogen-containing compound D | 42 | 23 |
| Nitrogen-containing compound E | 43 | 22 |
| Nitrogen-containing compound F | 37 | 16 |
| Nitrogen-containing compound G | 39 | 9 |

**Table 4: mechanical properties test of test objects using the sulfonate-based anion resin provided in example 7**

| Group | Tensile strength (MPa) | Elongation at break (%) |
|---|---|---|
| Nitrogen-containing compound A1 | 55 | 17 |
| Nitrogen-containing compound A2 | 51 | 20 |
| Nitrogen-containing compound A3 | 54 | 16 |
| Nitrogen-containing compound A4 | 49 | 12 |
| Nitrogen-containing compound B | 48 | 19 |
| Nitrogen-containing compound C | 54 | 15 |
| Nitrogen-containing compound D | 49 | 17 |
| Nitrogen-containing compound E | 48 | 14 |
| Nitrogen-containing compound F | 43 | 9 |
| Nitrogen-containing compound G | 46 | 7 |

## Claims

1. A nitrogen-containing compound, charactered in that the nitrogen-containing compound comprises a segment I with a formula of 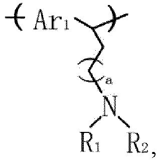 wherein a represents number of methylene groups, a is a positive integer, Ar₁ is an aryl structural unit, and R₁ and R₂ are each independently selected from H, a hydrocarbyl group, or a substituted hydrocarbyl group, or, R₁ and R₂ are connected and form a poly-membered ring together with a N atom to which they are connected.

2. The nitrogen-containing compound according to claim 1, charactered in that in the segment I, the Ar₁ comprises at least one of the following structural units: 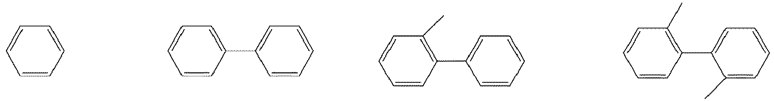 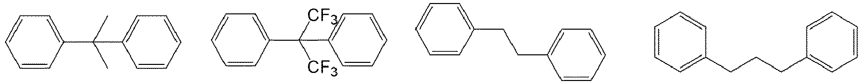 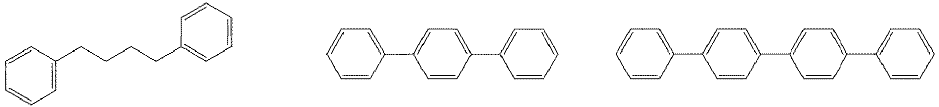 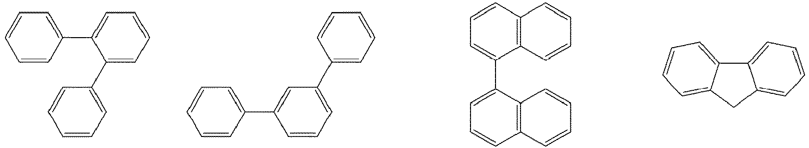 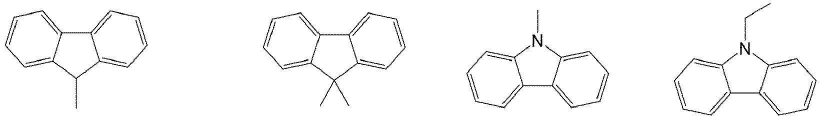 preferably in segment I, Ar₁ comprises

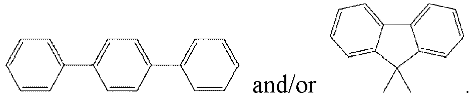

3. The nitrogen-containing compound according to claim 2, charactered in that in the segment I, the R₁ and the R₂ are each independently selected from H, methyl, a chain alkyl group containing 2 to 7 carbon atoms, a cycloalkyl group containing 3 to 10 carbon atoms, an aryl group or a substituted aryl group; or, the R₁ and the R₂ are connected and form a poly-membered ring together with a N atom to which they are connected, and the poly-membered ring is a five-membered ring, a six-membered ring or a seven-membered ring;
preferably in the segment I, R₁ and R₂ are independently selected from methyl or a chain alkyl group containing 2 to 7 carbon atoms; and
preferably in the segment I, R₁ and R₂ are connected and form a six membered ring together with a N atom to which they are connected, and optionally, the six-membered ring is a piperidine ring or a piperazine ring.

4. The nitrogen-containing compound according to claim 3, charactered in that the segment I has a formula of

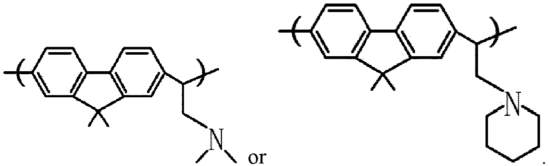

5. The nitrogen-containing compound according to any one of claims 1 to 4, charactered in that,
the nitrogen-containing compound further comprises at least one of segment II, segment III and segment IV;
the segment II has a formula of 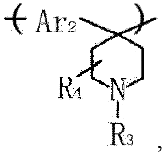 and wherein Ar₂ is an aryl structural unit;
segment III has a formula of and 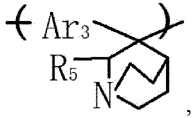 and wherein Ar₃ is an aryl structural unit;
segment IV has a formula of 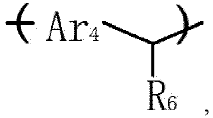 and wherein Ar4 is an aryl structural unit; and
preferably the R₃, the R₄, the R₅, and the R₆ are each independently selected from H, a hydrocarbyl group, or a substituted hydrocarbyl group.

6. The nitrogen-containing compound according to claim 5, charactered in that the Ar₂, the Ar₃, and the Ar₄ individually comprise at least one of the following structural units:

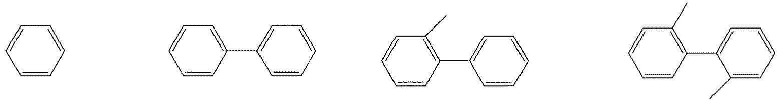

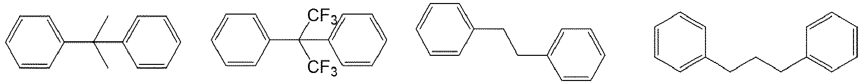

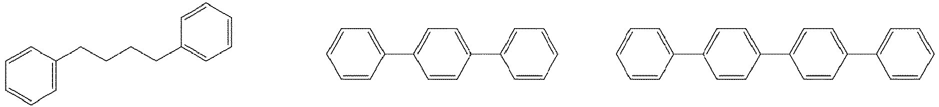

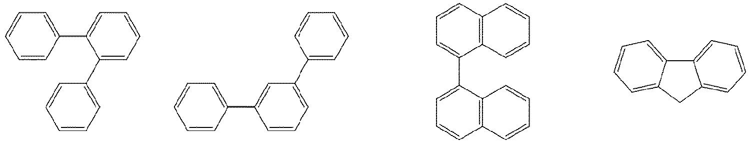

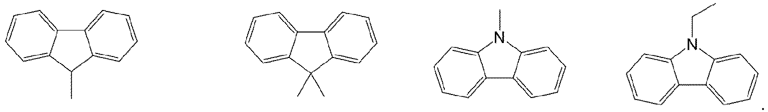

7. The nitrogen-containing compound according to claim 5, charactered in that the nitrogen-containing compound comprises a general structure as follows: 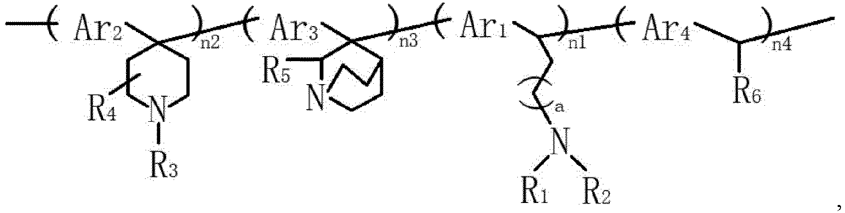 wherein n1 represents a degree of polymerization of segment I; n2 represents a degree of polymerization of segment II, and n2 is a non-negative integer; n3 represents a degree of polymerization of segment III, and n3 is a non-negative integer; Ar₃ is an aryl structural unit; and n4 represents a degree of polymerization of segment IV, and n4 is a non-negative integer.

8. A method for preparing a nitrogen-containing compound according to any one of claims 1 to 7, charactered in that the method comprises steps of:
S1. preparing a monomer raw material, selecting a corresponding aromatic monomer according to an aryl structural unit contained in a backbone of the nitrogen-containing compound, using the aromatic monomer as a backbone monomer raw material, and selecting a branched monomer raw material according to a type of segments included in the nitrogen-containing compound, wherein the branched monomer raw material comprises an aminoacetal monomer with a general formula of 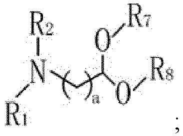
S2. adding the monomer raw material into an alkyl organic solvent, and fully mixing to obtain a reaction base liquid;
S3. adding an organic acid catalyst into the reaction base liquid, so that the aromatic monomer and the aminoacetal monomer in the reaction base liquid polymerize under an action of the organic acid catalyst;
S4. treating product of the polymerization reaction with pure water or an alkaline solution to remove residual organic acid catalyst, washing and drying to obtain a nitrogen-containing compound.

9. The method according to claim 8, charactered in that the aminoacetal monomer comprises at least one of the following monomers:

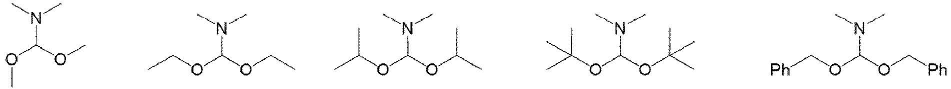

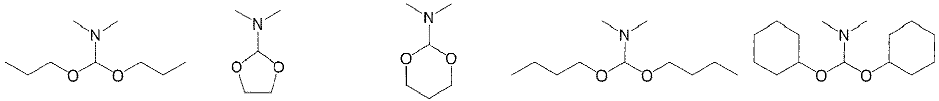

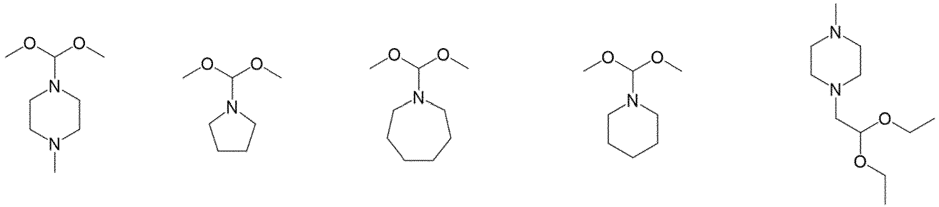

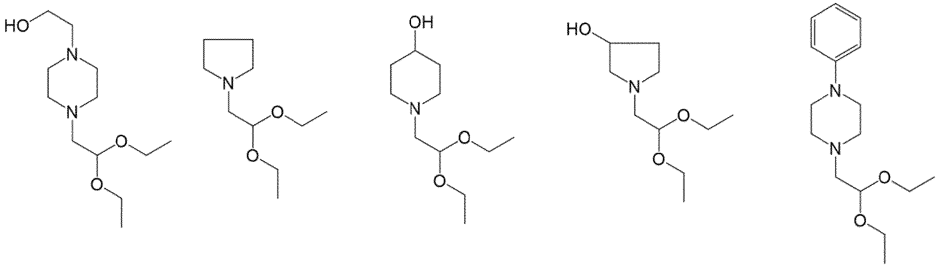

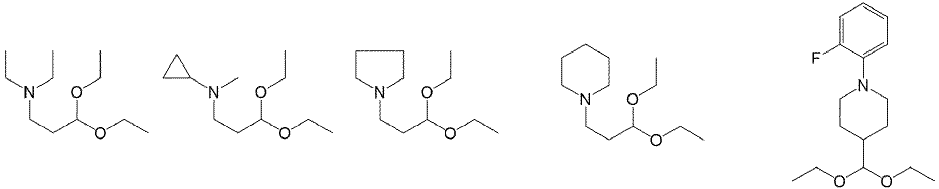

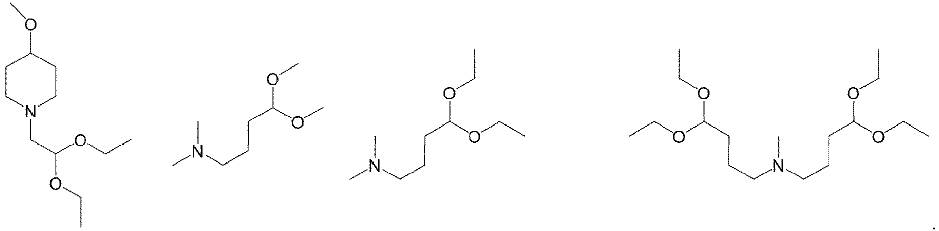

10. The method according to claim 8, charactered in that the branched monomer raw material further comprises a piperidone monomer with a general formula of 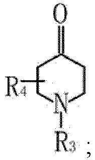 preferably the piperidone monomer comprises at least one of the following monomers:

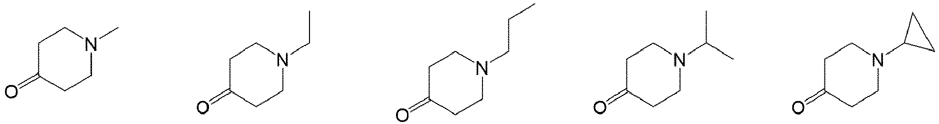

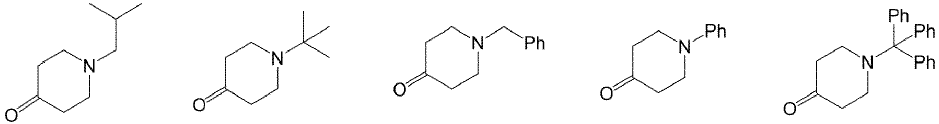

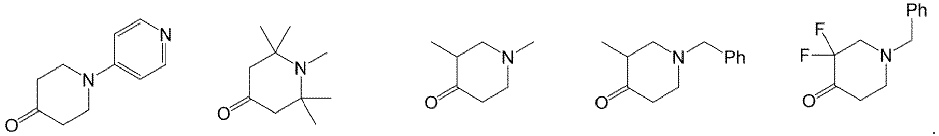

11. The method according to claim 8, charactered in that the branched monomer raw material further comprises a quinuclidone monomer with a general formula of 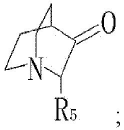 preferably the quinuclidone monomer comprises at least one of the following monomers:

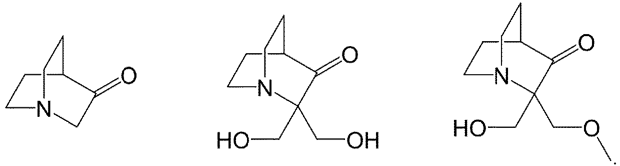

12. The method according to claim 8, charactered in that the branched monomer raw material further comprises an acetal monomer with a general formula of 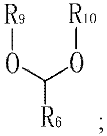 preferably the acetal monomer comprises at least one of the following monomers:

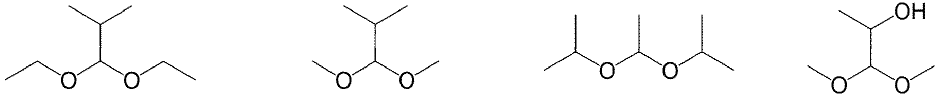

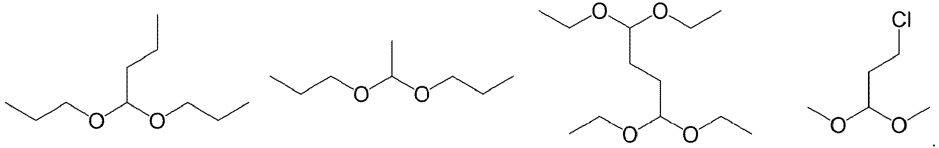

13. The method according to claim 8, charactered in that the organic acid catalyst includes at least one of methanesulfonic acid, pentafluoropropionic acid, trifluoroacetic acid, trifluoromethanesulfonic acid, and heptafluorobutyric acid; and/or
the alkyl organic solvent includes at least one of dichloromethane, trichloromethane, chloroform, and tetrahydrofuran; and/or
the alkaline solution contains at least one of sodium hydroxide, sodium bicarbonate, potassium bicarbonate, potassium carbonate, sodium carbonate, and potassium hydroxide.

14. An anionic resin, charactered in that the anionic resin comprises a segment V with a formula of 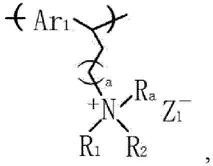 wherein a represents number of methylene groups, and a is a positive integer; Ar₁ is an aryl structural unit; R₁ and R₂ are each independently selected from H, a hydrocarbyl group or a substituted hydrocarbyl group, or, R₁ and R₂ are connected and form a poly-membered ring together with a N atom to which they are connected; Rₐ is selected from one of an aromatic group, a chain alkyl group containing 1 to 10 carbon atoms, and a cycloalkyl group containing 1 to 10 carbon atoms; and Z₁⁻represents an anion;
preferably in the segment V, Ar₁ comprises at least one of the following structural units:

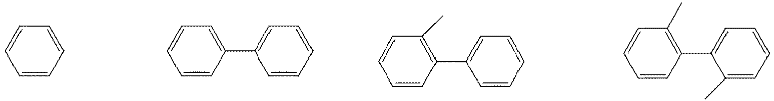

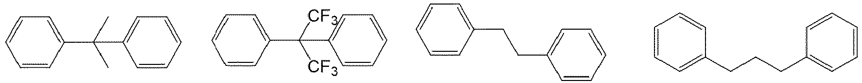

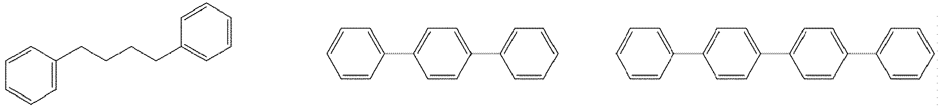

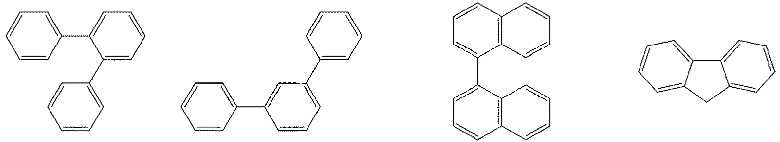

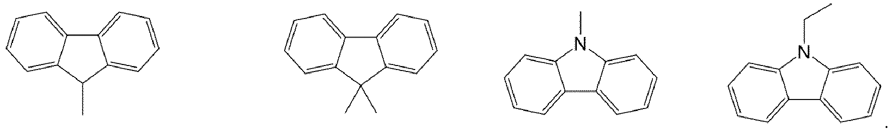

15. The anionic resin according to claim 14, charactered in that,
the anionic resin further comprises at least one of segment VI, segment VII and segment IV;
segment IV has a formula of 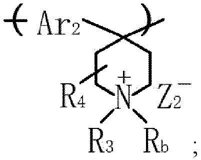 wherein Ar₂ is an aryl structural unit, Z₂ represents an anion, and R_{b} is selected from one of an aromatic group, a chain alkyl group containing 1 to 10 carbon atoms, and a cycloalkyl group containing 3 to 10 carbon atoms;
segment VII has a formula of 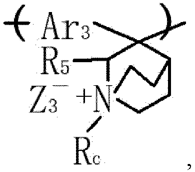 wherein Ar₃ is an aryl structural unit, Z₃ represents an anion, and R_{c} is selected from one of an aromatic group, a chain alkyl group containing 1 to 10 carbon atoms, and a cycloalkyl group containing 3 to 10 carbon atoms; and
segment IV has a formula of 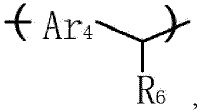 wherein Ar₄ is an aryl structure unit;
preferably the anionic resin comprises a general structure as follows: 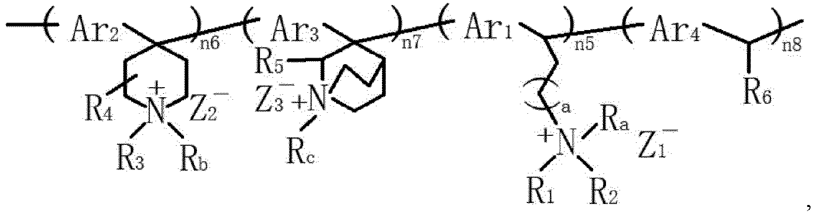
wherein n5 represents a degree of polymerization of segment V, and n5 is a positive integer; n6 represents a degree of polymerization of segment VI, and n6 is a non-negative integer; n7 represents a degree of polymerization of segment VII, and n7 is a non-negative integer; and n8 represents a degree of polymerization of segment IV, and n8 is a non-negative integer.
